# EUROPÄISCHE PATENTSCHRIFT

(11) **EP 2 198 684 B1**
(45) Veröffentlichungstag und Bekanntmachung des Hinweises auf die Patenterteilung: **05.09.2012**
(21) Anmeldenummer: 09014433.8
(22) Anmeldetag: 19.11.2009
(51) Int. Cl.: A01C 23/00, A01M 7/00, B05B 1/20

(54) **Schaltventilgehäuse und Düsenträger für Spritzvorrichtung für die Landtechnik**
Switching valve housing and nozzle holder for agricultural spraying device
Boîtier de soupape de commande et support de buses pour dispositif de pulvérisation pour la technique agricole

(30) Priorität: 17.12.2008 DE 102008062871
(43) Veröffentlichungstag der Anmeldung: 23.06.2010
(73) Patentinhaber: Lechler GmbH, 72555 Metzingen (DE)
(72) Erfinder: Schenk, Thomas, 72639 Neuffen (DE); Gomes-Alves, Joaquim, 72764 Reutlingen (DE)
(74) Vertreter: Wilhelm, Martin

(56) Entgegenhaltungen:
- WO-A2-2007/100247
- FR-A1- 2 850 884
- US-B1- 6 431 096

## Beschreibung

Die Erfindung betrifft ein Schaltventilgehäuse, insbesondere für Spritzvorrichtungen für die Landtechnik, mit einem Ventilführungskanal, der eine Führung für einen Ventilkörper bereitstellt und an dessen einem Ende ein Ventilsitz angeordnet ist, der mittels des in dem Ventilführungskanal verschiebbaren Ventilkörpers wahlweise freigegeben oder verschlossen werden kann, einem Fluidkanal, wobei der Fluidkanal den Ventilführungskanal im Wesentlichen rechtwinklig schneidet und wobei der Ventilkörper in seiner, den Ventilsitz verschließenden Stellung den Fluidkanal wenigstens teilweise durchquert und wobei der Fluidquerkanal einen rechteckigen Querschnitt aufweist.

Die Erfindung betrifft auch einen Düsenträger für Spritzvorrichtungen für die Landtechnik mit einem erfindungsgemäßen Schaltventilgehäuse, mit einem Anschlussrohr zum Anschließen an eine Spritzleitung, einem rechtwinklig zum Anschlussrohr angeordneten Querkanal und wenigstens einem rechtwinklig zum Querkanal und parallel zum Anschlussrohr angeordneten Düsenanschlussrohr zum Anschließen einer Spritzdüse.

In der Landwirtschaft hat die Spezialisierung weiter Einzug gehalten. Jede Kultur beziehungsweise jedes Pflanzenschutzmittel muss optimal ausgebracht werden. Hierzu gehört dann auch, bei einer Spritzvorrichtung, beispielsweise einer Feldspritze, die jeweils optimale Düse einzusetzen. Der Landwirt möchte aber nicht jedes Mal die Düse wechseln müssen, sondern per Knopfdruck die Düse einschalten können. Hierfür sind pneumatisch schaltbare Ventile an Düsenträgern bekannt, die aber den Nachteil haben, sehr groß zu bauen. Eine Größenreduktion der Düsenträger mit pneumatisch schaltbaren Ventilen ist nicht ohne weiteres möglich, da die Strömungsquerschnitte hoch gehalten werden müssen, um Strömungsverluste gering zu halten. Wird auf pneumatisch schaltbare Ventile verzichtet, sind Einfachdüsenträger im Einsatz, die mit einem sogenannten Tropfstopp ausgerüstet sind. Sinkt der Druck in der Spritzmittelleitung unter 0,5 bar, schalten die Düsen ab, wird der Druck wieder erhöht, schalten die Düsen ein.

Die internationale Offenlegungsschrift WO 2007/100247 A2 zeigt einen Sprühkopf zum Bedrucken oder zum Besprühen von textilen Materialien mit einer Flüssigkeit. Sprühdüsen sind dabei in einer unteren Wand eines flüssigkeitführenden Fluidquerkanals ausgebildet. Der Fluidquerkanal wird von Düsennadeln durchquert, die wahlweise die Sprühdüsen verschließen oder freigeben.

Aus der französischen Offenlegungsschrift FR 2850884 ist eine Sprüheinrichtung bekannt, die einen Düsenträger für Spritzvorrichtungen für die Landtechnik mit einem Anschlussrohr zum Anschließen an eine Spritzleitung, einem rechtwinklig zum Anschlussrohr angeordneten Fluidquerkanal und wenigstens einem rechtwinklig zum Fluidquerkanal und parallel zum Anschlussrohr angeordneten Düsenanschlussrohr zum Anschließen einer Spritzdüse zeigt. Über den Querschnitt eines Fluidquerkanals ist keine Angabe enthalten.

Aus der US-Patentschrift US 6,431,096 B1 ist die Verwendung von Fluidquerkanälen mit rechteckförmigen Querschnitt bei Spritzvorrichtungen für die Landtechnik bekannt.

Mit der Erfindung soll ein kompaktes Schaltventil beziehungsweise ein kompakter Düsenträger geschaffen werden, wobei der Strömungswiderstand gering gehalten wird.

Erfindungsgemäß ist hierzu ein Schaltventilgehäuse, insbesondere für Spritzvorrichtungen für die Landtechnik, vorgesehen, mit einem Ventilführungskanal, der eine Führung für einen Ventilkörper bereitstellt und an dessen einem Ende ein Ventilsitz angeordnet ist, der mittels des in dem Ventilführungskanal verschiebbaren Ventilkörpers wahlweise freigegeben oder verschlossen werden kann, mit einem Fluidquerkanal, wobei der Fluidquerkanal den Ventilführungskanal im Wesentlichen rechtwinklig schneidet und wobei der Ventilkörper in seiner, den Ventilsitz verschließenden Stellung den Fluidquerkanal wenigstens teilweise durchquert, bei dem der Fluidquerkanal einen rechteckigen Querschnitt aufweist, der Ventitführungskanal mittels des Fluidquerkanals seitlich angeschnitten ist, sodass der Ventilführungskanal im Mündungsbereich des Fluidquerkanals mit einem rechteckförmigen Fenster versehen ist.

Ein rechteckiger Querschnitt beim Fluidquerkanal ermöglicht überraschenderweise einen geringeren Strömungswiderstand als dies bei einem kreisförmigen Querschnitt des Fluidquerkanals möglich wäre, ohne dabei die Führung des Ventilkörpers im Ventilführungskanal zu beeinträchtigen. Mit einem rechteckigen Kanal ist bei gleicher Kanalhöhe ein größerer Querschnitt möglich als bei einem kreisförmigen Querschnitt, daher kann ein geringerer Strömungswiderstand bei gleicher Kanalhöhe erreicht werden. Eine geringe Kanalhöhe des Fluidquerkanals trägt wiederum zu einer guten Führung des Ventilkörpers bei, da im Bereich der Einmündung des Fluidquerkanals der Ventilführungskanal nur auf einer gegenüber einem kreisrunden Querschnitt geringeren Höhe geöffnet ist. Die geringere Höhe des Fluidkanals mit rechteckigen Querschnitt erlaubt darüber hinaus auch das Schaltventilgehäuse und eine stromabwärts am Fluidkanal angeordnete Düse näher zusammenzurücken und dadurch ein kompaktes Bauteil zu schaffen.

In Weiterbildung der Erfindung ist eine Höhe des Fluidquerkanals mit rechteckigem Querschnitt parallel zur Mittellängsachse des Ventilführungskanals kleiner als eine Breite des Fluidkanals.

Auf diese Weise können große freie Strömungsquerschnitte geschaffen werden, ohne dass der Ventilführungskanal so weit aufgeschnitten ist, dass die Führung des Ventilkörpers nicht mehr vollständig gewährleistet ist.

In Weiterbildung der Erfindung entspricht eine Breite des Fluidquerkanals im Wesentlichen einer Breite, insbesondere einem Durchmesser des Ventilführungskanals.

Beispielsweise ist vorgesehen, den Ventilführungskanal mit kreisförmigem Querschnitt auszuführen. Die Seitenwände des Fluidkanals mit rechteckigem Querschnitt gehen dann in die Seitenwände des Ventilführungskanals über. Der Ventilführungskanal ist dann beispielsweise annähernd auf einer Hälfte geöffnet. In der Höhe kann die Öffnung des Ventilführungskanals aber gering gehalten werden, da durch den rechteckigen Querschnitt des Fluidquerkanals auch bei geringer Höhe ein ausreichend großer Strömungsquerschnitt erreicht werden kann, um einen geringen Strömungswiderstand sicherzustellen. Vorteilhafterweise kann eine Querschnittsfläche des Fluidkanals im Wesentlichen einer Querschnittsfläche des Ventilführungskanals entsprechen.

In Weiterbildung der Erfindung ist das Schaltventilgehäuse als einstückiges Spritzgussteil ausgebildet.

Auf diese Weise ist eine kostengünstige Herstellung in großen Stückzahlen möglich. Die einstückige Ausbildung erleichtert dabei die kompakte Ausführung, da nicht zusätzlicher Platz für Schnittstellen zwischen einzelnen Bauteilen vorgesehen werden muss.

Das der Erfindung zugrundeliegende Problem wird auch durch einen Düsenträger für Spritzvorrichtungen für die Landtechnik gelöst, mit einem Anschlussrohr zum Anschließen an eine Spritzleitung, einem rechtwinklig zum Anschlussrohr angeordneten Fluidquerkanal und wenigstens einem rechtwinklig zum Fluidquerkanal und parallel zum Anschlussrohr angeordneten Düsenanschlussrohr zum Anschließen einer Spritzdüse, bei dem der Fluidquerkanal einen rechteckigen Querschnitt und das Düsenanschlussrohr einen kreisrunden Querschnitt aufweist.

Mittels des rechteckigen Querschnitts des Fluidquerkanals kann dessen Höhe reduziert werden und infolgedessen kann die am Düsenanschlussrohr angeordnete Spritzdüse näher zur Spritzleitung hingerückt werden.

Dadurch ist eine sehr kompakte Ausführung des Düsenträgers möglich. Durch den rechteckigen Querschnitt des Fluidquerkanals kann dennoch ein großer freier Strömungsquerschnitt und damit ein geringer Strömungswiderstand erzielt werden.

In Weiterbildung der Erfindung weist das Anschlussrohr einen kreisrunden Querschnitt auf.

In Weiterbildung der Erfindung ist auf einer dem Düsenrohr gegenüberliegenden Seite des Fluidquerkanals ein Schaltventilgehäuse vorgesehen.

Durch Vorsehen eines Schaltventilgehäuses kann eine am Düsenträger angeordnete Spritzdüse wahlweise an- oder abgeschaltet werden. Indem der Fluidquerkanal einen rechteckigen Querschnitt aufweist, kann ein geringer Strömungswiderstand erreicht werden und dennoch kann das Schaltventilgehäuse eine ausreichend lange Führung für einen Ventilkörper bereitstellen.

In Weiterbildung der Erfindung ist im Bereich der Mündung des Düsenrohres in den Fluidquerkanal ein Ventilsitz vorgesehen. Vorteilhafterweise ist ein Ventilkörper eines im Schaltventilgehäuse anordenbaren Schaltventils im Schaltventilgehäuse verschiebbar gelagert und erstreckt sich durch den Fluidquerkanal hindurch zum Ventilsitz.

In Weiterbildung der Erfindung sind zwei Düsenrohre vorgesehen, die an einem jeweiligen Ende des Fluidquerkanals angeordnet sind.

Durch Vorsehen von zwei Düsenrohren, die jeweils mittels eines zugeordneten pneumatischen Schaltventils wahlweise mit der Spritzleitung verbunden oder von dieser abgetrennt werden können, ist eine für die meisten Anwendungen ausreichende Flexibilität gegeben. Beispielsweise wird an jedem der Düsenrohre eine unterschiedliche Spritzdüse montiert, so dass wahlweise auf die eine oder andere Spritzdüse umgeschaltet werden kann, wenn die Rahmenbedingungen dies erfordern.

In Weiterbildung der Erfindung ist der Düsenträger einstückig aus Kunststoffspritzguss ausgebildet.

Weitere Merkmale und Vorteile der Erfindung ergeben sich aus den Ansprüchen und der nachfolgenden Beschreibung einer bevorzugten Ausführungsform der Erfindung im Zusammenhang mit den Zeichnungen. In den Zeichnungen zeigen:
- Fig. 1: eine Ansicht von schräg vorne eines erfindungsgemäßen Düsenträgers gemäß einer bevorzugten Ausführungsform,
- Fig. 2: eine Seitenansicht des Düsenträgers der Fig. 1,
- Fig. 3: eine Schnittansicht auf den mit einem Absatz versehenen Schnitt A-A in Fig. 2,
- Fig. 4: eine Draufsicht auf die Schnittebene B-B der Fig. 2,
- Fig. 5: eine Draufsicht auf den mit zwei Absätzen versehenen Schnitt D-D der Fig. 2,
- Fig. 6: eine Seitenansicht eines erfindungsgemäßen Düsenträgers, der mit Schaltventilen und Spritzdüsen versehen ist und
- Fig. 7: eine Draufsicht auf den Schnitt F-F in Fig. 6.

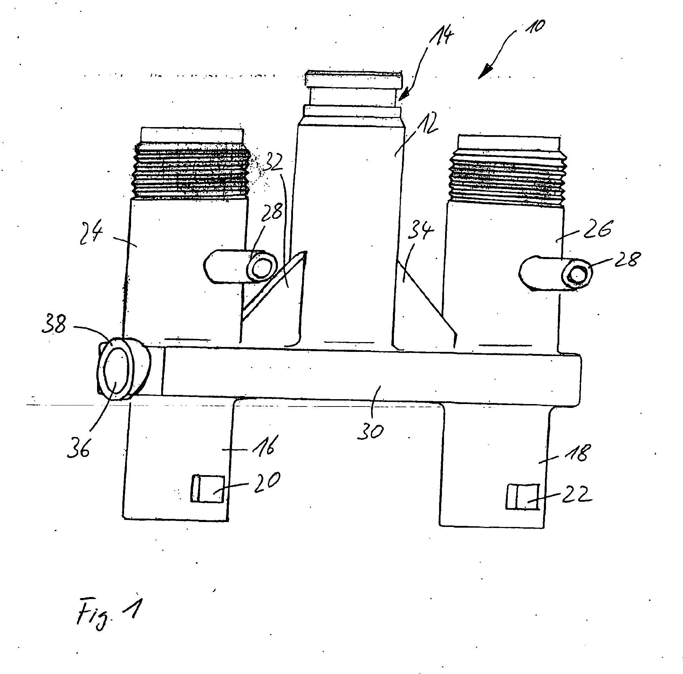

Die Ansicht der Fig. 1 zeigt einen Düsenträger 10 gemäß einer bevorzugten Ausführungsform der Erfindung, der als einstückiges Kunststoffspritzgussteil ausgebildet und dafür vorgesehen ist, zwei Schaltventile und zwei Spritzdüsen zu tragen. Der Düsenträger 10 weist ein Anschlussrohr 12 mit kreisrundem Querschnitt auf, das mittels eines Kupplungsstücks 14 in ein passendes Gegenkupplungsstück an einer Spritzleitung angeschlossen wird. Die Spritzleitung ist Teil einer Feldspritze und führt dann sogenannte Spritzbrühe, also mit einem Wirkstoff versehene Trägerflüssigkeit, meistens Wasser. Über den Düsenträger 10 gelangt diese Spritzbrühe zu den Spritzdüsen, die am unteren Ende von zwei Düsenrohren 16, 18 am Düsenträger 10 befestigt sind. Der Übersichtlichkeit halber sind weder das Spritzrohr noch die Spritzdüsen selbst in Fig. 1 dargestellt.

Die Düsenrohre 16, 18 sind jeweils mit zwei einander gegenüberliegenden Vorsprüngen 20, 22 versehen, wobei in der Darstellung der Fig. 1 jeweils lediglich einer der Vorsprünge 20, 22 zu erkennen ist. Diese Vorsprünge dienen dazu, Spritzdüsen mittels Bajonettverschluss an den Düsenrohren 16, 18 zu befestigen.

Der Düsenträger 10 ist dafür vorgesehen, mit zwei pneumatischen Schaltventilen ausgerüstet zu werden, die dann in rohrförmigen Schaltventilgehäusen 24, 26 angeordnet werden. Die Schaltventilgehäuse 24, 26 definieren jeweils einen Ventilführungskanal mit kreisrundem Querschnitt, der in der Darstellung der Fig. 1 nicht zu erkennen ist. Die Schaltventilgehäuse 24, 26 weisen darüber hinaus jeweils einen Druckluftanschluss 28 auf. Ein den Düsenanschlussrohren 16 beziehungsweise 18 jeweils abgewandtes Ende der Schaltventilgehäuse 24, 26 ist mit einem Außengewinde versehen, um eine nicht dargestellte Verschlusskappe aufschrauben zu können. Ein im Schaltventilgehäuse 24, 26 aufgenommener Ventilkörper wird in Abhängigkeit einer Druckluftbeaufschlagung sich innerhalb des jeweiligen Schaltventilgehäuses 24, 26 bewegen und eine Strömungsverbindung vom Anschlussrohr 12 zum jeweiligen Düsenanschlussrohr 16, 18 freigeben oder absperren. Eine Strömungsverbindung zwischen dem Anschlussrohr 12 und den Düsenanschlussrohren 16, 18 wird mittels eines Fluidquerkanals hergestellt, der in der Darstellung der Fig. 1 nicht zu erkennen ist, aber in einem Querträger 30 angeordnet ist. Der Fluidquerkanal weist, wie der Querträger 30, einen rechteckigen Querschnitt auf. Das Düsenanschlussrohr 12 ist mittels zweier Versteifungsrippen 32, 34 sowohl gegen den Querträger 30 als auch das jeweilige Schaltventilgehäuse 24 abgestützt. Da der gesamte Düsenträger 10 ausschließlich über das Kupplungsstück 14 mit dem Spritzrohr verbunden ist, können im Fahrbetrieb einer Feldspritze erhebliche Beschleunigungen auf den Düsenträger 10 wirken, die mittels der Verstärkungsrippen 32, 34 großflächig ab- und weitergeleitet werden können.

Eine kreisrunde Bohrung 36 an der in Fig. 1 linken Stirnseite des Querträgers 30 ist in einem zylindrischen Vorsprung 38 angeordnet und mit dem Fluidquerkanal im Querträger 30 verbunden. Die Durchgangsbohrung 36 wird im Betrieb des Düsenträgers 10 mittels eines Stopfens verschlossen und weist einen so großen Querschnitt auf, dass der rechteckige Querschnitt des Fluidquerkanals in den Kreisquerschnitt der Durchgangsbohrung 36 einbeschrieben werden kann. Bei der Herstellung des Düsenträgers 10 dient die Durchgangsbohrung 36 zum Entfernen eines Stempels, der in eine Spritzgussform für den Düsenträger 10 hineinragt und die Außenabmessungen des Fluidquerkanals aufweist.

Bereits an der Darstellung der Fig. 1 ist zu erkennen, dass der Düsenträger 10 ein kompaktes Bauteil darstellt und insbesondere einen geringen Abstand vom Kupplungsstück 14, das mit der Spritzleitung in Verbindung steht und den Spritzdüsen, die mit jeweils einem Düsenanschlussrohr 16, 18 verbunden sind, verwirklicht. Mittels zweier pneumatischer Schaltventile, die in jeweils einem Schaltventilgehäuse 24, 26 angeordnet sind, kann wahlweise eine oder beide der Spritzdüsen an den Düsenanschlussrohren 16, 18 in Betrieb oder außer Betrieb gesetzt werden.

Sind an den Düsenanschlussrohren 16, 18 unterschiedliche Spritzdüsen montiert, so können beispielsweise wahlweise unterschiedliche Spritzbilder realisiert werden, abhängig von der gerade zu behandelnden Pflanzenkultur oder auch abhängig von der gerade verspritzten Spritzbrühe beziehungsweise dem darin enthaltenden Wirkstoff.

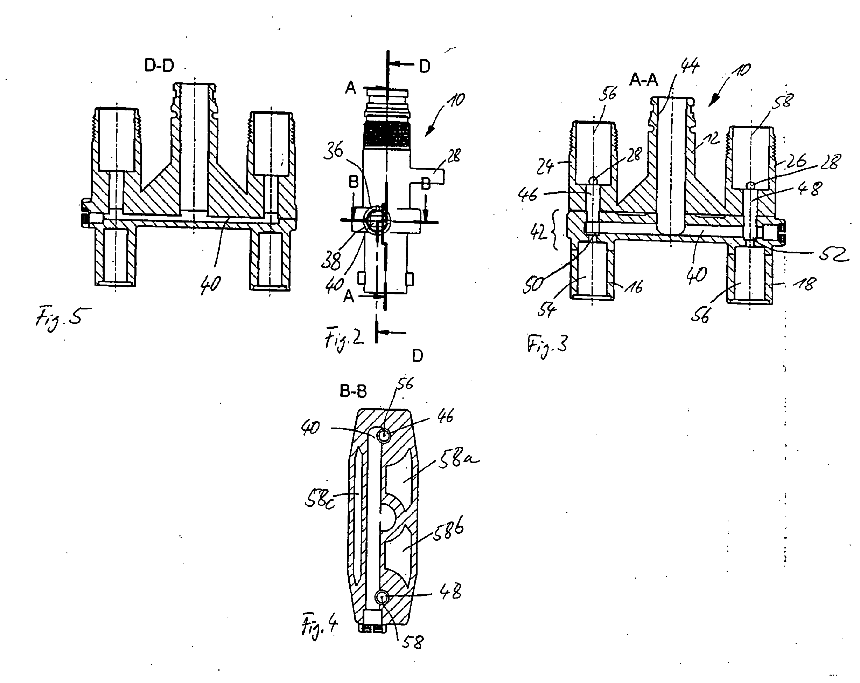

Die Darstellung der Fig. 2 zeigt eine Seitenansicht des Düsenträgers 10 der Fig. 1.

Innerhalb des zylinderförmigen Vorsprungs 38 ist der rechteckige Querschnitt des Fluidquerkanals 40 zu erkennen. Es ist weiter zu erkennen, dass der rechteckige Querschnitt des Fluidquerkanals 40 vollständig in den kreisförmigen Querschnitt der Durchgangsbohrung 36 im zylinderförmigen Vorsprung 38 passt, so dass also ein Stempel, der während der Herstellung des Düsenträgers 10 durch Kunststoffspritzgießen in die Spritzgussform hineinragt, nach dem Erhärten des Kunststoffes durch die Durchgangsbohrung 36 wieder herausgezogen werden kann. Um den Fluidquerkanal 40 abzudichten, wird die Durchgangsbohrung 36 dann mittels eines eingedrehten Stopfens dicht verschlossen.

Die Darstellung der Fig. 3 zeigt die Ansicht auf den Schnitt A-A in Fig. 2. Es wird darauf hingewiesen, dass die Schnittfläche A-A zwei Absätze aufweist, so dass in der Darstellung der Fig. 3 der mit der Bezugsziffer 42 bezeichnete Bereich gegenüber den übrigen erkennbaren Schnittflächen versetzt ist. Außerhalb des Bereichs 42 verlaufen die Schnittflächen exakt auf der Mittelebene des Anschlussrohres 12, der Schaltventilgehäuse 24, 26 und der Düsenanschlussrohre 16, 18. Im Bereich 42 ist die Schnittfläche A-A demgegenüber versetzt, um noch den Fluidquerkanal 40 erkennen zu lassen. Der Fluidquerkanal 40 schneidet den Anschlusskanal 44 im Anschlussrohr 12, über den Spritzbrühe von einer Spritzleitung zugeführt wird. Der Fluidquerkanal 40 führt dann nach rechts beziehungsweise links zu jeweils einem Ventilführungskanal 46 beziehungsweise 48. Die Ventilführungskanäle 46, 48 sind in den Schaltventilgehäusen 24, 26 vorgesehen und erstrecken sich bis zu einem jeweiligen Ventilsitz 50, 52. An die Ventilsitze 50, 52 schließt sich jeweils ein Düsenrohrkanal 54, 56 an, der dann letztendlich zu einer jeweiligen Spritzdüse führt. Die Düsenanschlussrohrkanäle 54, 56 weisen stromabwärts des jeweiligen Ventilsitzes 50, 52 zunächst einen kleinen Durchmesser auf, wobei dann aber jeweils eine abrupte Querschnittsvergrößerung vorgesehen ist. Die Düsenanschlussrohrkanäle 54, 56 bestehen somit aus einem ersten kreiszylindrischen Abschnitt mit kleinem Durchmesser unmittelbar stromabwärts der Ventilsitze 50, 52 und aus einem zweiten kreiszylindrischen Abschnitt mit großem Durchmesser, der dann bis zum Ende des Düsenanschlussrohres 16, 18 durchgeht.

Eine Strömungsverbindung zwischen dem Anschlussrohrkanal 44 und den Düsenanschlussrohrkanälen 54, 56 wird somit über den Fluidquerkanal 40 und die Ventilsitze 50, 52 hergestellt.

Um einen jeweiligen Düsenanschlussrohrkanal 54, 56 abzusperren, wird ein in der Darstellung der Fig. 3 nicht dargestellter Ventilkörper auf den jeweiligen Ventilsitz 50, 52 aufgesetzt, um eine Strömungsverbindung zwischen Querkanal 40 und jeweiligem Düsenanschlussrohrkanal 54, 56 zu verschließen. Der Ventilkörper ist dabei in dem Ventilführungskanal 46, 48 verschiebbar gelagert und wird von einem nicht dargestellten, im Schaltventilgehäuse 24 angeordneten und druckluftbeaufschlagten Kolben bewegt. Der Kolben ist weiter federkraftbeaufschlagt und in Richtung des Ventilsitzes 50, 52 vorgespannt. Wenn an den Druckluftanschlüssen 28 daher kein Druck anliegt, verschließen die Ventilkörper die Ventilsitze 50, 52 und es kann keine Spritzbrühe durch die Spritzdüsen austreten.

Wie anhand der Darstellung der Fig. 3 und speziell der Kante am Übergang zwischen dem Fluidquerkanal 40 und dem jeweiligen Ventilführungskanal 46, 48 zu erkennen ist, weist der Fluidquerkanal 40 einen rechteckigen Querschnitt auf. Die Ventilführungskanäle 46, 48 sind dadurch im Mündungsbereich des Fluidquerkanals 40 mit einem rechteckförmigen Fenster versehen. Der Fluidquerkanal 40 ist, siehe auch Fig. 4, weiter seitlich versetzt zur jeweiligen Mittelachse 56, 58 der Ventilführungskanäle 46, 48 angeordnet. Die Ventilführungskanäle 46, 48 werden dadurch lediglich seitlich angeschnitten. Aufgrund des rechteckigen Querschnitts des Fluidquerkanals 40 kann dabei gewährleistet werden, dass der im Ventilführungskanal 46, 48 verschiebbar angeordnete Ventilkörper noch sicher geführt ist und dennoch ein größerer Verschneidungsquerschnitt erzielt wird, als wenn sich zwei runde Querschnitte schneiden würden. Dies hat dann den Vorteil, dass bei der Fluidzuführung zur Spritzdüse nur ein sehr geringer Druckverlust erzeugt wird.

Wenn ein runder Fluidquerkanal anstelle des rechteckigen Fluidquerkanals 40 verwendet würde, so würde dieser runde Fluidquerkanal eine größere Bauhöhe in Anspruch nehmen als dies der rechteckige Fluidquerkanal 40 tut. Der Düsenträger 10 könnte damit in der Hochrichtung der Fig. 3 nicht annähernd so kompakt ausgeführt werden. Ein kreiszylindrischer Fluidquerkanal mit gleicher Höhe wie der rechteckige Fluidquerkanal 40 hätte wiederum einen erhöhten Strömungswiderstand zur Folge, da der freie Strömungsquerschnitt wesentlich geringer wäre. Eine Vergrößerung der für die Strömung zur Verfügung stehenden freien Querschnitte hätte wiederum zur Folge, dass die Schließkraft der Feder, die den Ventilkörper in die Schließstellung vorspannt, erhöht werden müsste und daraus resultierend auch eine Vergrößerung der mit Druckluft beaufschlagten Fläche des Ventilkolbens erforderlich machen würde. Bei Verwendung eines kreisrunden Querschnitts für den Fluidquerkanal würde somit der gesamte Düsenträger 10 größer und teurer. Das erfindungsgemäße Vorsehen eines rechteckigen Querschnitts für den Fluidquerkanal 40 und auch dessen Kombination mit den runden Bohrungen der Ventilführungskanäle 46, 48 kann dahingegen ein sehr effektives und verlustarmes Schaltventil bereitstellen.

Die Darstellung der Fig. 4 zeigt eine Draufsicht auf die Schnittebene B-B der Fig. 2.

Gut zu erkennen ist der Fluidquerkanal 40, der die Ventilführungskanäle 46, 48 seitlich anschneidet. Die Mittelachse 56, 58 der Ventilführungskanäle 46, 48 liegt dabei außerhalb des Querschnitts des Fluidquerkanals 40. Die Wandung der Ventilführungskanäle 46, 48 schließt sich damit auch im Bereich der Mündung des Fluidquerkanals 40 wieder, so dass auch in diesem Bereich noch eine Führung des Ventilkörpers sichergestellt ist.

In der Schnittansicht der Fig. 4 sind Ausnehmungen 58a, 58b und 58c im Düsenträger 10 zu erkennen, die durch einseitig offene Vertiefungen im Querträger 30 gebildet sind. Diese Vertiefungen haben eine versteifende Wirkung auf den Querträger 30 und dienen gleichzeitig der Materialersparnis.

Die Darstellung der Fig. 5 zeigt eine Ansicht der Schnittfläche D-D in Fig. 2. Wie Fig. 2 zu entnehmen ist, weist die Schnittfläche D-D auf halber Höhe des Fluidquerkanals 40 einen Absatz auf. Dies ist der Grund dafür, dass der Fluidquerkanal 40 in der Darstellung der Fig. 5 eine geringere Höhe aufzuweisen scheint, als dies tatsächlich der Fall ist. Tatsächlich läuft die Schnittfläche D-D in der Darstellung der Fig. 2 gesehen bis zur halben Höhe des Fluidquerkanals 40, um dann senkrecht zur Zeichenebene der Fig. 5 in diese hineinzuverlaufen und dann erst außerhalb des Fluidquerkanals 40 wieder nach oben weiterzulaufen. In der Darstellung der Fig. 5 erscheint daher nur die halbe Höhe des Fluidquerkanals 40.

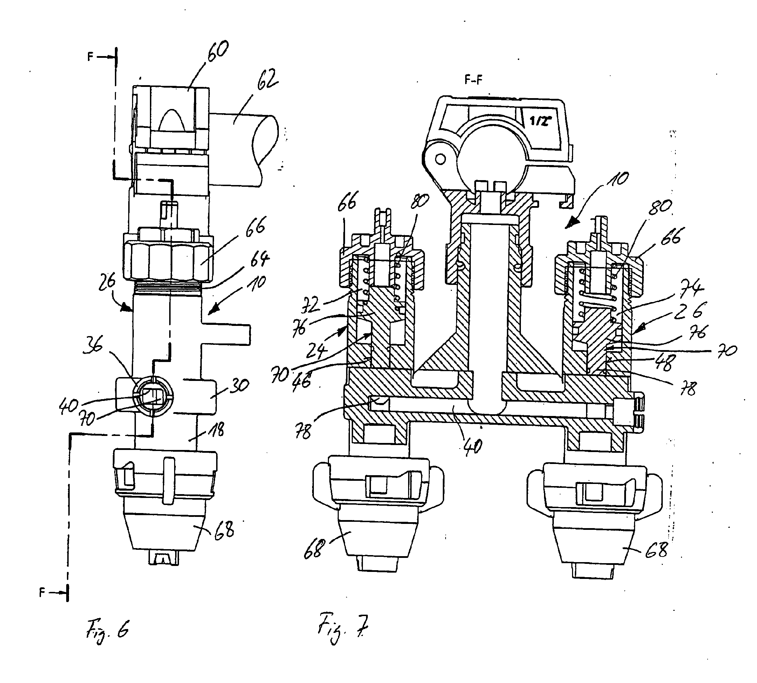

Die Darstellung der Fig. 6 zeigt den erfindungsgemäßen Düsenträger 10 der Fig. 2, wobei allerdings Schaltventile und Spritzdüsen montiert sind und auch eine Halte- und Anschlussschelle 60 für den Anschluss an eine Spritzleitung 62 dargestellt ist. Der Düsenträger 10 wird mittels der Halteschelle 60 an der Spritzleitung 62 befestigt, in der Spritzbrühe gefördert wird. Die Halteschelle 60 stellt gleichzeitig eine Strömungsverbindung zwischen Spritzleitung 62 und Düsenträger 10 her. Mit der Halteschelle 60 ist der Düsenträger 10 über ein Kupplungsstück verbunden, das eine abgedichtete Verbindung bereitstellt. Auf die Außengewinde 64 der Schaltventilgehäuse 24, 26 ist jeweils eine Verschlusskappe 66 aufgeschraubt. Auf die Düsenanschlussrohre 16, 18 ist jeweils eine Spritzdüse 68 aufgesetzt. Durch den zylindrischen Vorsprung 36 hindurch, der noch nicht mit einem Einschraubstopfen verschlossen ist, kann man den Fluidquerkanal 40 mit rechteckigem Querschnitt sowie einen Abschnitt eines Ventilkörpers 70 des Schaltventils erkennen.

In der Ansicht der Fig. 6 fällt auf, dass der Querträger 30 nur eine geringe Höhe aufweist und infolgedessen ein Abstand zwischen den Spritzdüsen 68 und der Spritzleitung 62 vergleichsweise gering ist und somit eine kompakte Düsenträgereinheit realisiert ist.

Die Schnittansicht der Fig. 7 zeigt eine Draufsicht auf den Schnitt F-F in Fig. 6. Wie in Fig. 6 zu erkennen ist, weist der Schnitt F-F mehrere Absätze auf.

In den Schaltventilgehäusen 24, 26 sind jeweils Ventilkammern 72, 74 vorgesehen, die nach oben hin durch die Verschlusskappen 66 abgeschlossen werden und sich nach unten hin, in Richtung auf den Fluidquerkanal 40 durch die Ventilführungskanäle 46, 48 fortsetzen. Die Ventilkörper 70 weisen jeweils einen Kolbenabschnitt 76 und einen Stößelabschnitt 78 mit gegenüber dem Kolbenabschnitt 76 verringertem Durchmesser auf. Der Kolbenabschnitt 76 weist einen Außendurchmesser auf, der etwa dem Innendurchmesser der Ventilkammern 72, 74 entspricht und der Stößelabschnitt 78 ist an den Innendurchmesser der Ventilführungskanäle 46, 48 angepasst und darin geführt. Der Ventilkörper 70 ist mittels nicht dargestellter O-Ringe sowohl gegen die Ventilführungskanäle 46, 48 als auch gegen die Ventilkammern 72, 74 abgedichtet. Jeweils eine Druckfeder 80 zwischen Verschlusskappe 66 und Kolbenabschnitt 76 spannt den Ventilkörper 70 in eine Stellung vor, in der das untere, freie Ende des Stößelabschnitts 78 auf einem jeweiligen Ventilsitz 50, 52 aufliegt. Aus dieser vorgespannten Endstellung können die Ventilkörper 70 mittels Einleitung von Druckluft in den Abschnitt der Ventilkammern 72, 74, der unterhalb der Kolbenabschnitte 76 liegt, angehoben werden. In Fig. 7 ist der Ventilkörper 70 im linken Schaltventilgehäuse 24 in seiner angehobenen Darstellung gezeigt, in der er den Ventilsitz 50 freigibt, so dass Spritzbrühe aus der Spritzleitung 62 über den Fluidquerkanal zu der in Fig. 7 linken Spritzdüse 68 gelangen kann.

Der Ventilkörper 70 im Schaltventilgehäuse 26 ist in seiner abgesenkten Stellung dargestellt, in der er den Ventilsitz 52 verschließt. Die in Fig. 7 rechte Spritzdüse 68 ist somit abgeschaltet, so dass keine Spritzbrühe über den Fluidquerkanal 40 und den Ventilsitz 52, siehe Fig. 3, zu der in Fig. 7 rechte Spritzdüse 68 gelangen kann.

Anhand der Darstellung der Fig. 7 ist auch zu erkennen, dass für eine Verringerung des Strömungswiderstandes die Ventilsitze 50, 52, siehe Fig. 3, nicht ohne Weiteres in ihrem Durchmesser vergrößert werden können, ohne dass der gesamte Düsenträger 10 größer und schwerer würde. Denn in der angehobenen Stellung des Ventilkörpers 70, zu erkennen im linken Schaltventilgehäuse 24 der Fig. 7, wirkt der Druck des Fluids in dem Fluidquerkanal 40 und im Ventilführungskanal 46 auch auf das untere, freie Ende des Stößelabschnitts 78 des Ventilkörpers 70 und drückt diesen infolgedessen nach oben. Je größer nun der freie Querschnitt der Ventilsitze 50, 52 gewählt wird, desto größer muss auch der Durchmesser des Stößelabschnitts 78 des Ventilkörpers 70 gewählt werden und desto größer ist die nach oben gerichtete Kraft durch das Fluid im Fluidquerkanal 40, das den Ventilkörper 40 nach oben drückt. Um daher nach Abschalten der Druckluftzufuhr mittels der Druckfeder 80 den Ventilkörper 70 in seine Schließstellung zu drücken, muss dann auch eine entsprechend stärkere Druckfeder 80 gewählt werden. Dies bedingt dann aber wieder, dass entweder der Druck der Druckluft, die zum Schalten verwendet wird, erhöht wird oder dass der Außendurchmesser des Kolbenabschnitts 76 des Ventilkörpers 70 größer gemacht wird. Infolgedessen würde aber auch das Schaltventilgehäuse 24 mit größerem Durchmesser ausgeführt werden und der Düsenträger 10 könnte insgesamt nicht mehr so kompakt ausgeführt werden, wie dies bei der erfindungsgemäßen Ausgestaltung der Fall ist, bei der mittels des Fluidquerkanals 40 mit rechteckigem Querschnitt ein geringer Strömungswiderstand am Übergang zwischen Fluidquerkanal 40 und dem Ventilführungskanal 46, 48 bzw. dem Ventilsitz 50, 52 erreicht wird. Die Wahl eines rechteckigen Querschnitts für den Fluidquerkanal 40 ermöglicht dadurch eine sehr kompakte und leichte Ausführung des Düsenträgers 10.

## Patentansprüche

1. Schaltventilgehäuse, insbesondere für Spritzvorrichtungen für die Landtechnik, mit
einem Ventilführungskanal (46, 48), der eine Führung für einen Ventilkörper (76) bereitstellt und an dessen einem Ende ein Ventilsitz (50, 52) angeordnet ist, der mittels des in dem Ventilführungskanal (46, 48) verschiebbaren Ventilkörpers (76) wahlweise freigegeben oder verschlossen werden kann,
einem Fluidquerkanal (40), wobei der Fluidquerkanal (40) den Ventilführungskanal (46, 48) im Wesentlichen rechtwinklig schneidet, wobei der Ventilkörper (76) in seiner, den Ventilsitz (50, 52) verschließenden Stellung den Fluidquerkanal (40) wenigstens teilweise durchquert, und wobei der Fluidquerkanal (40) einen rechteckigen Querschnitt aufweist, **dadurch gekennzeichnet, dass** der Ventilführungskanal (46, 48) mittels des Fluidquerkanals (40) seitlich angeschnitten ist, so dass der Ventilführungskanal (46, 48) im Mündungsbereich des Fluidquerkanals (40) mit einem rechteckförmigen Fenster versehen ist.

2. Schaltventilgehäuse nach Anspruch 1, **dadurch gekennzeichnet, dass** eine Höhe des Fluidquerkanals (40) mit rechteckigem Querschnitt parallel zur Mittellängsachse (56, 58) des Ventilführungskanals (46, 48) kleiner.ist als eine Breite des Fluidquerkanals (40).

3. Schaltventilgehäuse nach Anspruch 1 oder 2, **dadurch gekennzeichnet, dass** eine Breite des Fluidquerkanals (40) im Wesentlichen einer Breite, insbesondere einem Durchmesser, des Ventilführungskanals (46, 48) entspricht.

4. Schaltventilgehäuse nach einem der vorstehenden Ansprüche, **dadurch gekennzeichnet, dass** eine Querschnittsfläche des Fluidquerkanals (40) im Wesentlichen einer Querschnittsfläche des Ventilführungskanals (46, 48) entspricht.

5. Schaltventilgehäuse nach wenigstens einem der vorstehenden Ansprüche, **dadurch gekennzeichnet, dass** das Schaltventilgehäuse (24, 26) als einstückiges Spritzgussteil ausgebildet ist.

6. Düsenträger für Spritzvorrichtungen für die Landtechnik mit einem Schaltventilgehäuse nach einem der vorstehenden Ansprüche, mit einem Anschlussrohr (12) zum Anschließen an eine Spritzleitung (62) und wenigstens einem rechtwinklig zum Fluidquerkanal (40) und parallel zum Anschlussrohr (12) angeordneten Düsenanschlussrohr (16, 18) zum Anschließen einer Spritzdüse (68), wobei der Fluidquerkanal (40) rechtwinklig zum Anschlussrohr angeordnet ist und das Düsenanschlussrohr (16, 18) einen kreisrunden Querschnitt aufweist.

7. Düsenträger nach Anspruch 6, **dadurch gekennzeichnet, dass** das Anschlussrohr (12) einen kreisrunden Querschnitt aufweist.

8. Düsenträger nach Anspruch 6 oder 7, **dadurch gekennzeichnet, dass** auf einer dem Düsenrohr (16, 18) gegenüberliegenden Seite des Fluidquerkanals (40) ein Schaltventilgehäuse (24, 26) vorgesehen ist.

9. Düsenträger nach Anspruch 8, **dadurch gekennzeichnet, dass** im Bereich der Mündung des Düsenrohres (16, 18) in den Fluidquerkanal (40) ein Ventilsitz (50, 52) vorgesehen ist.

10. Düsenträger nach Anspruch 9, **dadurch gekennzeichnet, dass** ein Ventilkörper (76) eines im Schaltventilgehäuse (24, 26) anordenbaren Schaltventils im Ventilführungskanal (46, 48) verschiebbar gelagert ist und sich durch den Fluidquerkanal (40) hindurch zum Ventilsitz (50, 52) erstreckt.

11. Düsenträger nach einem der vorstehenden Ansprüche 6 bis 10, **dadurch gekennzeichnet, dass** zwei Düsenanschlussrohre (16, 18) vorgesehen sind, die an einem jeweiligen Ende des Fluidquerkanals (40) angeordnet sind.

12. Düsenträger nach einem der vorstehenden Ansprüche 6 bis 11, **dadurch gekennzeichnet, dass** der Düsenträger (10) einstückig als Kunststoffspritzgussteil ausgebildet ist.

## Claims

1. Switching valve housing, in particular for agricultural spraying devices, having
a valve guide channel (46, 48) providing a guide for a valve body (76) and at whose one end a valve seat (50, 52) is arranged which can be optionally released or closed by means of the valve body (76) displaceable inside the valve guide channel (46, 48), and
a transverse fluid channel (40) which intersects the valve guide channel (46, 48) substantially at right angles, where the valve body (76) in its position closing the valve seat (50, 52) at least partially passes through the transverse fluid channel (40) and where the transverse fluid channel (40) has a rectangular cross-section, **characterized in that** the valve guide channel (46, 48) is intersected at the side by the transverse fluid channel (40) such that the valve guide channel (46, 48) is provided with a rectangular window in the outlet area of the transverse fluid channel (40).

2. Switching valve housing according to Claim 1, **characterized in that** a height of the transverse fluid channel (40) with rectangular cross-section and parallel to the central longitudinal axis (56, 58) of the valve guide channel (46, 48) is less than a width of the transverse fluid channel (40).

3. Switching valve housing according to Claim 1 or 2, **characterized in that** a width of the transverse fluid channel (40) corresponds substantially to a width, in particular to a diameter, of the valve guide channel (46, 48).

4. Switching valve housing according to one of the preceding claims, **characterized in that** a cross-sectional surface of the transverse fluid channel (40) corresponds substantially to a cross-sectional surface of the valve guide channel (46, 48).

5. Switching valve housing according to at least one of the preceding claims, **characterized in that** the switching valve housing (24, 26) is designed as a one-piece injection casting.

6. Nozzle holder for agricultural spraying devices having a switching valve housing according to one of the preceding claims, having a connection pipe (12) for connection to an injection line (62) and at least one nozzle connection pipe (16, 18) arranged at right angles to the transverse fluid channel (40) and parallel to the connection pipe (12) for connection of an injection nozzle (68), where the transverse fluid channel (40) is arranged at right angles to the connection pipe and the nozzle connection pipe (16, 18) has a circular cross-section.

7. Nozzle holder according to Claim 6, **characterized in that** the connection pipe (12) has a circular cross-section.

8. Nozzle holder according to Claim 6 or 7, **characterized in that** a switching valve housing (24, 26) is provided on a side of the transverse fluid channel (40) opposite the nozzle connection pipe (16, 18).

9. Nozzle holder according to Claim 8, **characterized in that** a valve seat (50, 52) is provided in the area of the outlet of the nozzle connection pipe (16, 18) in the transverse fluid channel (40).

10. Nozzle holder according to Claim 9, **characterized in that** a valve body (76) of a switching valve arrangeable inside the switching valve housing (24, 26) is displaceably mounted inside the valve guide channel (46, 48) and extends through the transverse fluid channel (40) to the valve seat (50, 52).

11. Nozzle holder according to one of the preceding claims 6 to 10, **characterized in that** two nozzle connection pipes (16, 18) are provided which are arranged at a respective end of the transverse fluid channel (40).

12. Nozzle holder according to one of the preceding claims 6 to 11, **characterized in that** the nozzle holder (10) is designed in one piece as a plastic injection casting.

## Revendications

1. Cage de soupape de commande, en particulier destinée à des dispositifs de pulvérisation pour la technique agricole, comprenant
un conduit de guidage de soupape (46, 48), qui fournit un guide pour un corps de soupape (76) et à une extrémité duquel est disposé un siège de soupape (50, 52) qui peut être au choix ouvert ou fermé au moyen du corps de soupape (76) mobile dans le conduit de guidage de soupape (46, 48),
une conduite transversale de fluide (40), sachant que la conduite transversale de fluide (40) coupe le conduit de guidage de soupape (46, 48) selon un angle droit pour l'essentiel, que, dans sa position fermant le siège de soupape (50, 52), le corps de soupape (76) traverse au moins partiellement la conduite transversale de fluide (40), et que la conduite transversale de fluide (40) présente une section transversale rectangulaire, **caractérisée en ce que** le conduit de guidage de soupape (46, 48) est latéralement entaillé par la conduite transversale de fluide (40) de telle sorte que dans la zone de l'embouchure de la conduite transversale de fluide (40), le conduit de guidage de soupape (46, 48) est muni d'une ouverture de forme rectangulaire.

2. Cage de soupape de commande selon la revendication 1, **caractérisée en ce qu'**une hauteur de la conduite transversale de fluide (40) avec section transversale rectangulaire parallèle à l'axe médian longitudinal (56, 58) du conduit de guidage de soupape (46, 48) est inférieure à une largeur de la conduite transversale de fluide (40).

3. Cage de soupape de commande selon la revendication 1 ou 2, **caractérisée en ce qu'**une largeur de la conduite transversale de fluide (40) correspond pour l'essentiel à une largeur, en particulier à un diamètre, du conduit de guidage de soupape (46, 48).

4. Cage de soupape de commande selon l'une des revendications précédentes, **caractérisée en ce qu'**une surface de section transversale de la conduite transversale de fluide (40) correspond pour l'essentiel à une surface de section transversale du conduit de guidage de soupape (46, 48).

5. Cage de soupape de commande selon au moins une des revendications précédentes, **caractérisée en ce que** la cage de soupape de commande (24, 26) est formée par une seule pièce moulée par injection.

6. Support de buses destiné à des dispositifs de pulvérisation pour la technique agricole, avec une cage de soupape de commande selon l'une des revendications précédentes, comprenant un tuyau de raccordement (12) pour branchement à une conduite de pulvérisation (62) et au moins un tuyau de raccordement de buse (16, 18) perpendiculaire à la conduite transversale de fluide (40) et parallèle au tuyau de raccordement (12) pour brancher une buse de pulvérisation (68), sachant que la conduite transversale de fluide (40) est disposée perpendiculairement au tuyau de raccordement et que le tuyau de raccordement de buse (16, 18) présente une section transversale circulaire.

7. Support de buses selon la revendication 6, **caractérisé en ce que** le tuyau de raccordement (12) présente une section transversale circulaire.

8. Support de buses selon la revendication 6 ou 7, **caractérisé en ce qu'**est prévue une cage de soupape de commande (24, 26) sur un côté de la conduite transversale de fluide (40) opposé au tuyau de buse (16, 18).

9. Support de buses selon la revendication 8, **caractérisé en ce que** dans la zone de l'embouchure du tuyau de buse (16, 18) est prévu un siège de soupape (50, 52) dans la conduite transversale de fluide (40).

10. Support de buses selon la revendication 9, **caractérisé en ce qu'**un corps de soupape (76) d'une soupape de commande pouvant être placée dans la cage de soupape de commande (24, 26) est logé de manière mobile dans le conduit de guidage de soupape (46, 48) et s'étend à travers la conduite transversale de fluide (40) jusqu'au siège de soupape (50, 52).

11. Support de buses selon l'une des revendications 6 à 10 précédentes, **caractérisé en ce que** sont prévus deux tuyaux de raccordement de buse (16, 18) qui sont disposés aux extrémités respectives de la conduite transversale de fluide (40).

12. Support de buses selon l'une des revendications 6 à 11 précédentes, **caractérisé en ce que** le support de buses (10) est formé par une seule pièce en matière synthétique moulée par injection.
